# EUROPEAN PATENT APPLICATION

(11) **EP 3 150 888 A1**
(43) Date of publication of application: **05.04.2017**
(21) Application number: 15187893.1
(22) Date of filing: 01.10.2015
(51) Int. Cl.: F16K 31/50, F16K 35/02, F16K 35/06, F16K 35/10, F16K 31/05

(54) **ACTUATOR FOR CONTROLLING A VALVE**

(71) Applicant: IMI Hydronic Engineering International SA, 1262 Eysins (CH)
(72) Inventor: VOLOVEC, Peter, 8258 KAPELE (SI); CIOSK, Grzegorz, 43-100 TYCHY (PL)
(74) Representative: Awapatent AB

(57) **Abstract**

An actuator (1) is provided for controlling a valve having a valve rod. The actuator comprises an actuator spindle (3) adapted to control the movement of the valve rod. The actuator also comprises a manual override arrangement for manually moving said actuator spindle, said manual override arrangement comprising:
a first element (12) having a through hole (14) for receiving a tool (16), a second element (18) operatively connected to said actuator spindle and having a receiving hole (20) for receiving the tool (16). The first element is movable from a non-aligned first position to a second position in which the through hole and the receiving hole are aligned. In the second position a tool may extend through said through hole and into said receiving hole in order to rotate said second element for transferring the rotation to said actuator spindle.

## Description

### Technical field of the Invention

The present invention relates to an actuator for controlling a valve having a valve rod.

### Background of the Invention

Fluid distribution systems, for e.g. heating, cooling and water supply are designed to feed a fluid from a source to a consumption point. Each consumption point typically has a calculated and designed flow or differential pressure requirement. However, depending on the type of hydronic system, the flow requirement is often variable over time and can change with factors like seasonality (e.g. summer or winter), that changes the load from the consumption points, temperature changes of the system fluid, changes in consumption of the system fluid (e.g. for drinking water).

Control valves are frequently used in fluid distribution systems and have a variable opening such that the flow rates can be controlled. An actutator for controlling the position of such a valve is often provided. Such an actuator is normally driven by means of a motor which drives an actuator spindle. The actuator spindle is in turn connected to a valve rod for cotrolling the opening degree of the valve. In some instances, such as before the actuator has been connected to the grid or during installation, it may be desirable to manually override the normal operating mode, by disconnecting the motor-driven operation of the actuator spindle and instead allowing for manual drive of the the actuator spindle. Therefore, some actuators are provided with manual override mechanisms. A protective cap or the like needs to be removed so that the operator may access the the mechanism and set it in manual override operating mode.

Although existing manual override mechansims serve their purpose, it would be desirable to provide a manual override mechanism which is more user friendly and yet reliable.

### Summary of the Invention

An object of the present invention is to provide an actuator which has a user friendly and reliable manual override arrangement. This and other objects, which will become apparent in the following, are accomplished by an actuator defined in the appended claims.

The present inventive concept is based on the insight that an element protecting or shielding the access to the manual override arrangement may be designed so that it forms part of the manual override arrangement. In particular, it has been realized by the inventors that the actual displacement of such a protecting or shielding element from its protecting or shielding state to its non-protecting/non-shielding state may be used for setting the actuator into manual override operating mode. Thus, instead of having to take two separate actions (removing protecting/shielding element and setting actuator in manual override operating mode), an operator may have both actions performed simultaneously. In other words, movement of the protecting/shielding element may change the actuator operating mode from normal operating mode to manual override operating mode.

According to an aspect of the inventive concept, an actuator for controlling a valve having a valve rod is provided. The actuator comprises:
a housing;
an actuator spindle arranged at least partly inside said housing, said actuator spindle being arranged to control the movement of the valve rod;
a manual override arrangement for manually moving said actuator spindle, said manual override arrangement comprising:
   a first element having a through hole for receiving a tool,
   a second element operatively connected to said actuator spindle and having a receiving hole for receiving the tool,
wherein said first element is movable between a first position where said through hole is non-aligned with said receiving hole, and a second position where said through hole is aligned with said receiving hole such that the tool may extend through said through hole and into said receiving hole in order to rotate said second element for transferring the rotation to said actuator spindle.

Thus, when the first element is in said first position the actuator is in normal operating mode, but when the first element is moved to said second position the actuator element is in manual override operating mode.

According to at least one example embodiment, said first element is arranged on said housing, and/or is a part of said housing. According to at least one example embodiment said first element is a separate part from the housing. In at least some example embodiments, the first element may be slidably movable between said first position and said second position. In at least some example embodiments it may be rotatably or pivotably movbly between said first position and said second position.

When the through hole of the first element is aligned with the receiving hole of the second element at least some portions are overlapping enough for a tool to be inserted through both the through hole and the receiving hole. Suitably, in said second position of the first element, said through hole is coaxial with the receiving hole, the through hole being axially displaced relative to the receiving hole.

In at least some example embodiments the through hole and the receiving hole have substantially the same diameter. In at least some example embodiments the receiving hole may be smaller than the through hole, as long as the tool can enter into the receiving hole.

The receiving hole may suitably be in the form of a blind hole having some kind of key at the bottom for engaging the received mating tool. The key may, for instance, be polygonal, such as square, hexagonal, or octagonal, or have any other suitable shape, such as star or lobe shape. In at least some example embodiments, rather than just having a bottom for matingly engaging the tool, the entire or at least a portion of the receiving hole may have a cross-section which is complementary to the cross-section of the tool. For instance, the entire receiving hole may have a hexagonal cross-section.

In other example embodiments the receiving hole is not in the form of a blind hole, but may instead be a through passage from one end of the second element to the opposite end of the second element.

When an operator mates a tool with a tool receiving portion in the receiving hole, the operator may, by means of the tool, rotate the second element around its axis. Thus, in the manual override operating mode, the second element is rotatable. Suitably, in the normal operating mode, the second element is not rotatable, but instead rotationally locked. Thus, when the first element is moved from the first position to the second position, that movement may cause the rotational locking of the second element to be released. Although, this may be implemented in differently designed embodiments, such as the movement of the first element causing movement of a rotationally locking element away from the second element, in at least some example embodiments, the movement of the first element causes the second element to move.

Thus, according to at least one example embodiment, movement of the first element from its first position to its second position causes the second element to move, whereby the manual override operating mode is established.

Once the manual override operating mode has been established, a user can move the actuator spindle via said second element by means of a tool which engages and rotates the second element. The second element and the actuator spindle holder may in some embodiments be rigidly connected to each other.

Thus, from the above it should now be clear that an operator can move the first element to align the through hole with the receiving hole simultaneously with setting the actuator in the manual override operating mode.

According to at least one example embodiment, said first element comprises a bevelled surface at least partly facing said second element, and wherein said bevelled surface is arranged to move said second element as said first element is moved from its first to its second position.

The housing may suitably be provided with an indentation or recess, in which the first element is arranged. The first element may, for instance, be slidable or rotatable in said indentation or recess.

In the first position of the first element, a gap may be formed between an outer surface of said second element and an inner surface of said first element. In the second position of the first element the bevelled surface (at the inner surface of the first element) may at least partly close the gap by moving, e.g. pushing in the axial direction, said second element. Alternatively, in the first position of the first element, there may be a slight contact which does not exert a pressing force on the second element, while in the second position (similarly to the first alternative) the bevelled surface provides an axial force component to the second element. In other words, a non-axial movement of the first element may be transferred into an axial movement of the second element. For instance, a sliding radial movement (radial in relation to the centre axis of the second element) of the first element from the first position to the second position will result in an axial movement of the second element.

As mentioned previously, according to at least one example embodiment, said first element is movable from its first position to its second position by being slidably movable or rotatably movable. This allows a compact protection of the second element and its receiving hole. For instance, a user may using his/her thumb or other finger slide the first element into the second position to remove the protecting/capping portion of the first element and to align the through hole of the first element with the receiving hole of the second element. At the same time as the access to the receiving hole is obtained the actuator has been placed in manual override operating mode by axial movement of the second element, and thus also the actuator spindle. In the manual override operating mode the actuator spindle becomes rotatable. Thus, when an operator rotates the second element with a tool, the actuator spindle will be rotated. Such manual rotation of the actuator spindle may cause the actuator spindle to travel in its axial direction by means of an external thread on the actuator spindle cooperating with an internal thread on another component (e.g. internal thread of a drive arrangement component, such as a gear). In normal operating mode, said other component may be rotated such that the actuator spindle is moved axially (without rotation of the actuator spindle) by means of said external thread of the actuator spindle cooperating with the internal thread of said rotating other component.

As mentioned above, in the normal operating mode, the second element is not rotatable, but instead rotationally locked. This means that in the normal operating mode, the actuator spindle which is operatively connected to the second element is also rotationally locked relative to its longitudinal axis. In other words, in the normal operating mode, the actuator spindle does not revolve around its own axis.

According to at least one example embodiment, the actuator spindle may be held by an actuator spindle holder, wherein the actuator spindle holder is operatively (i.e. directly or indirectly) connected to said second element. Suitably, the actuator spindle holder and the actuator spindle are rotationally locked relative to each other in both the normal operating mode and in the manual override operating mode. In other words, by controlling the actuator spindle holder, the actuator spindle can also be controlled. The constant rotational locking between the actuator spindle and the actuator spindle holder may, for instance, be achieved by a protrusion/groove interaction. For instance the actuator spindle may be provided with a protrusion which engages a groove in the actuator spindle holder, or vice versa. Suitably, the actuator spindle holder partly encloses the actuator spindle, e.g. about 10-60% of the length of the actuator spindle is enclosed.

According to at least one example embodiment, said actuator spindle holder is arranged radially outwardly and co-axially with said actuator spindle.

According to at least one example embodiment, said actuator spindle holder is arranged to hold said actuator spindle, and is arranged to be moved together with said actuator spindle when said actuator spindle holder is unlocked from a locking element (e.g. a locking element as described herein below). When unlocked from the locking element, the movement of the actuator spindle and the actuator spindle holder will typically be a rotational movement, as the rotation of the second element will be transferred to a rotation of the actuator spindle holder in the manual override operating mode. The actuator spindle and the actuator spindle holder may be connected, as exemplified above by means of cooperating protrusion and groove, or via any other suitable male-female coupling.

According to at least one example embodiment, said manual override arrangement further comprises a locking element, an actuator spindle holder (such as the one exemplified above) for holding at least a portion of said actuator spindle, and a locking arrangement having a first engaging portion comprised in said locking element and a second engaging portion comprised in said actuator spindle holder, said second engaging portion being arranged to engage with said first engaging portion, such that when said first engaging portion engages with said second engaging portion said actuator spindle holder is locked to said locking element.

The first engaging portion and the second engaging portion are releasable from each other, i.e. from their engaged state. Thus, the actuator spindle holder is releasably lockable to the locking element. In other words, said locking element prevents movement of said actuator spindle holder when said first engaging portion engages with said second engaging portion.

According to at least one example embodiment, the actuator comprises a spring element arranged to press said second engaging portion comprised in said actuator spindle holder towards said first engaging portion comprised in said locking element.

The locking element is suitably arranged internally of the housing of the actuator, and is e.g. attached to a fundament or a base portion inside said housing. This is reflected in at least one example embodiment, according to which the actuator comprises a base portion provided at least partly inside of said housing, wherein said locking element is attached to said base portion inside said housing, wherein a spring element is provided between said base portion and said actuator spindle holder, the spring element being biased to press said second engaging portion comprised in said actuator spindle holder towards said first engaging portion comprised in said locking element. Suitably, the locking element is fixed to the base portion so that the locking element cannot rotate relative to the base portion.

According to at least one example embodiment, the actuator spindle has a main extension in an axial direction, wherein said first engaging portion comprised in said locking element is arranged on a surface being perpendicular to said axial direction, and said second engaging portion comprised in said actuator spindle holder is arranged on a surface being perpendicular to said axial direction.

The first engaging portion comprised in said locking element may be provided on a surface of the locking element which is an inner and/or lower surface. The second engaging portion comprised in said actuator spindle holder may be provided on a surface of the actuator spindle holder which is an outer and/or upper surface.

According to at least one example embodiment said first engaging portion comprised in said locking element comprises teeth and said second engaging portion comprised in said actuator spindle holder comprises matching teeth. Such mutually matching or engaging teeth may in some embodiments be axially extending from the respective component, and in other embodiments the mutually matching teeth may be radially extending from the respective component. Other ways to rotationally lock the actuator spindle holder is also conceivable. For instance, instead of teeth, the actuator spindle holder could have an outer polygonal surface which can become rotationally locked by a corresponding polygonal inner surface of the locking element.

According to at least one example embodiment, said second element is operatively connected to, and is rotatably movable with said actuator spindle holder, and wherein
when said first element is in its first position, said actuator spindle holder is locked to said locking element, and
when said first element is in its second position, said second element and said actuator spindle holder is moved in such a way that said second engaging portion comprised in said actuator spindle holder is disengaged from said first engaging portion comprised in said locking element whereby said actuator spindle holder is unlocked from said locking element.

As mentioned previously, the actuator spindle may have a main extension in an axial direction of the actuator. According to at least one example embodiment, said second element and said actuator spindle holder are adapted to move in said axial direction. In other words, the second element and the actuator spindle holder may move together in the axial direction in order to disengage the actuator spindle holder from the locking element or to engage the actuator spindle holder with the locking element.

According to at least one example embodiment, said second element is operatively connected to said actuator spindle holder via a clutch arrangement. Said clutch arrangement is suitably an overload protection clutch arrangement, such that the rotation movement of the second element is only transferred to the actuator spindle holder up to a certain threshold force or torque. For example, if the actuator spindle has reached an end position (such as having pushed the valve rod into a valve seat to close the valve), in order to avoid overloading the actuator spindle by continued rotation thereof, the clutch arrangement will at said threshold force or torque temporarily operatively disengage the second element from the actuator spindle holder. This may be achieved, for instance, by a clutch arrangement having first cogs engaging with second cogs, wherein at or above said threshold force or torque the first cogs will pass over the second cogs instead of engaging them in a rotational movement.

According to at least one example embodiment, said second element is made in one piece with said actuator spindle holder. However, according to other example embodiments, said second element is made as a separate piece. Furthermore, according to at least some example embodiments, said second element may be operatively connected to the actuator spindle holder via an intermediate element. The above described clutch arrangement may, for instance, be located at the interface between the actuator spindle holder and the intermediate element.

For instance, according to at least one example embodiment, said manual override arrangement further comprises an intermediate element provided between said tool-receiving second element and said actuator spindle holder, and wherein said clutch arrangement comprises
a first clutch engaging portion comprised in an inner surface of said intermediate element, and
a second clutch engaging portion comprised in an outer surface of said actuator spindle holder.

Said inner surface of the intermediate element may suitably enclose said outer surface of the actuator spindle holder, such as two coaxially provided substantially cylindrical surfaces. The first clutch engaging portion may be provided with cogs extending radially inwardly from the inner surface of the intermediate element (i.e. extending in a direction towards the centre/longitudinal axis of the actuator spindle). The second clutch engaging portion may be provided with mating cogs extending radially outwardly from the outer surface of the actuator spindle holder (i.e. extending in a direction away from the centre/longitudinal axis of the actuator spindle).

According to at least one example embodiment, the actuator comprises a clutch spring adapted to press said first clutch engaging portion towards said second clutch engaging portion. In other words, the clutch spring is adapted to press a portion of said intermediate element towards a portion of said actuator spindle holder. Thus, if the overload protection is activated so that the mating cogs are temporarily disengaged from each other, the clutch spring is adapted to subsequently bring the cogs back into an engaged position. The actuator spindle holder may then be rotated by rotating the second element (unless of course, the force or torque at the clutch arrangement is too high so that the overload protection is again activated).

Thus, from the above it can be understood that, according to at least one example embodiment, said second element is arranged to receive and transfer a rotational movement from a tool to said actuator spindle via said intermediate element, said clutch and said actuator spindle holder. Apart from this rotational movement, it should be understood, that as described above, the movement of the first element from its non-aligned first position to its aligned second position, causes the second element and the intermediate element to move the actuator spindle holder from a locked position (relative to the previously discussed locking element) to an unlocked position. This movement is suitably in the axial direction of the actuator spindle.

According to at least one example embodiment, said locking element is arranged radially outwardly and co-axially with said actuator spindle holder.

According to at least one example embodiment, the actuator comprises a main drive gear having a through hole with internal threads, wherein said actuator spindle comprises matching external threads and is adapted to be guided in and along said through hole of the main drive gear.

In the normal operating mode when the main drive gear rotates, the internal thread of the main drive gear will also rotate and will due to the engagement with the matching external threads of the actuator spindle cause the actuator spindle to move axially. This axial movement of the actuator spindle may be accomplished without rotating the actuator spindle around its own axis. In particular, if the actuator spindle is rotationally, but not axially, locked to an actuator spindle holder, and the actuator spindle holder is in an unmovable state (e.g. locked by a locking element, such as described above), then the actuator spindle will travel along the actuator spindle holder in its axial direction.

In the manual override operating mode when the main gear does not rotate, a rotating movement of the unlocked actuator spindle holder will cause the actuator spindle to rotate and due to the cooperating threads the actuator spindle will advance along the through hole of the main drive gear, similarly to a threaded screw or bolt being rotated through a threaded stationary nut.

Thus, according to at least one example embodiment, in the normal operating mode, a rotation of the main drive gear results in an axial movement of the actuator spindle, while in the manual override operating mode, a rotation of the actuator spindle results in an axial movement of the actuator spindle.

While the above description has mainly focussed on the manual override operating mode, in the following there will be presented some features relating to the normal operating mode.

According to at least one example embodiment, the actuator comprises a guiding arrangement for guiding the actuator spindle, said guiding arrangement having first guiding means comprised in said actuator spindle holder, and second guiding means comprised in said actuator spindle,

such that in a normal operating mode of said actuator, said first engaging portion comprised in said locking element engages with said second engaging portion comprised in said actuator spindle holder, whereby said actuator spindle holder is locked to said locking element, and said actuator spindle is guidable along said actuator spindle holder via said guiding arrangement;

wherein in a manual override mode, said second engaging portion is disengaged from said first engaging portion whereby said actuator spindle holder is unlocked from said locking element, and said actuator spindle holder is rotatable together with said actuator spindle via said guiding arrangement.

Said first and second guiding means may, for instance, be a male-female coupling, such as a pin or protrusion being guided in an elongated groove, or conversely, a notch being guided by an elongated ridge.

For instance, according to at least one example embodiment, said guiding arrangement comprises:
an elongated groove provided in an inner surface of said actuator spindle holder, and
a pin provided on an outer surface of said actuator spindle, said pin being adapted to protrude into said elongated groove in order to guide said actuator spindle along said elongated groove.

In other conceivable embodiments, the elongated groove may be provided in an outer surface of the actuator spindle and the pin may be provided on the inner surface of the actuator spindle holder.

Furthermore, in any one of the above embodiments it is conceivable to have more than one pin and one matching groove, e.g. two or more pins guided in respective grooves.

### Brief description of the drawings

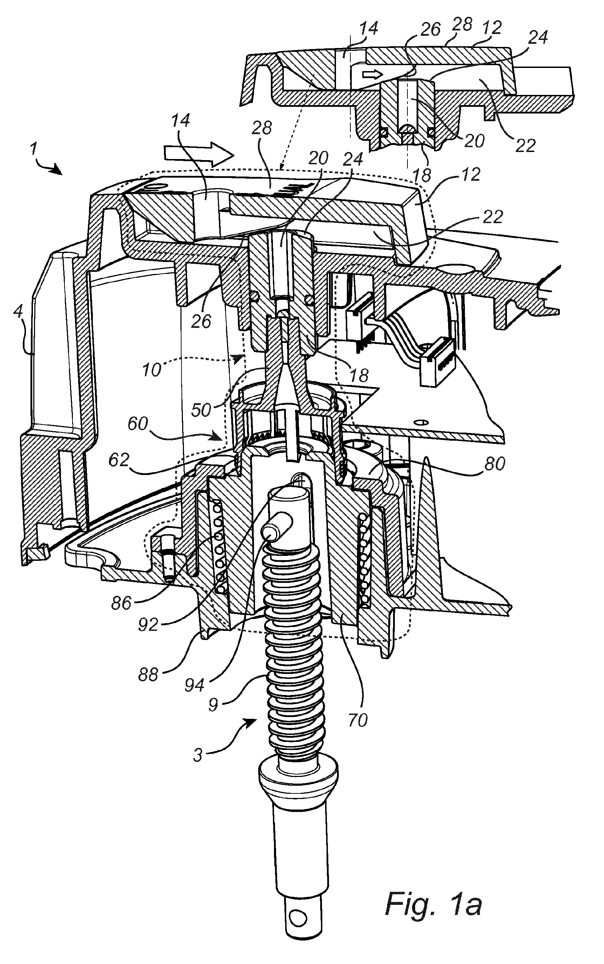

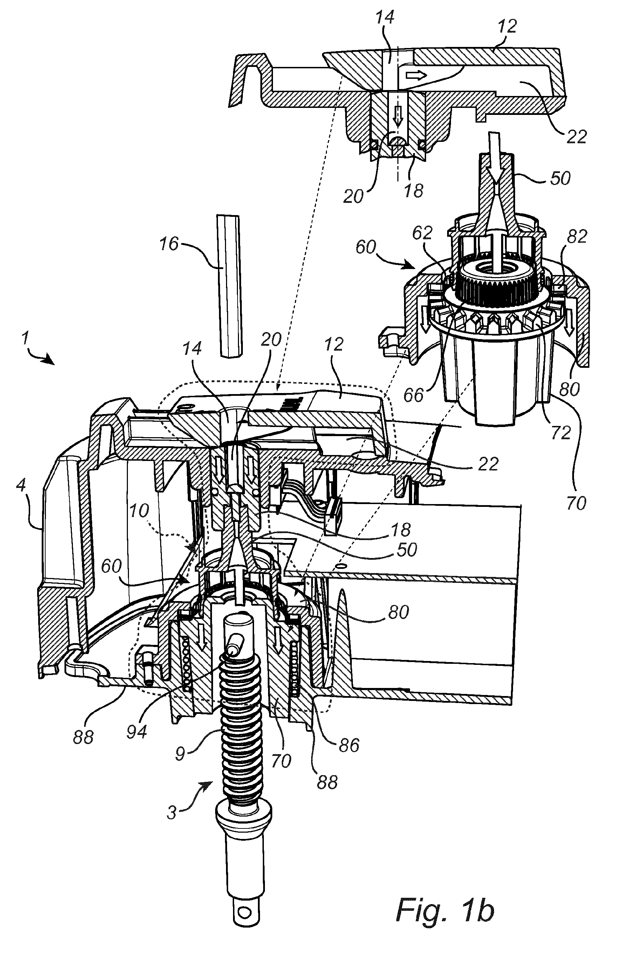

Fig. 1 a is a break-away view of parts of an actuator according to at least one example embodiment of the invention, the actuator being in normal operating mode.
Fig. 1 b is a break-away view of parts of said actuator in Fig. 1 a, the actuator being in normal operating mode.
Fig. 2 is a detailed view illustrating the cooperation between an actuator spindle and an actuator spindle holder in accordance with at least one example embodiment of the invention.
Fig. 3a is a detailed view of parts of a manual override arrangement of said actuator in Fig. 1 a, the actuator being in normal operating mode.
Fig. 3b is a detailed view of said parts of the manual override arrangement in Fig. 3a, the actuator being in manual override operating mode.
Fig. 4a is a detailed view of other parts of said manual override arrangement of said actuator in Fig. 1 a, the actuator being in normal operating mode.
Fig. 4b is a detailed view of said other parts of said manual override arrangement, the actuator being in manual override operating mode.

### Detailed description of the drawings

The above, as well as additional objects, features and advantages of the present inventive concept, will be better understood through the following illustrative and non-limiting detailed description of example embodiments of the present inventive concept, with reference to the appended drawings where the same reference numerals will be used for similar elements. In the following description, the present inventive concept is described with reference to an actuator for controlling a valve.

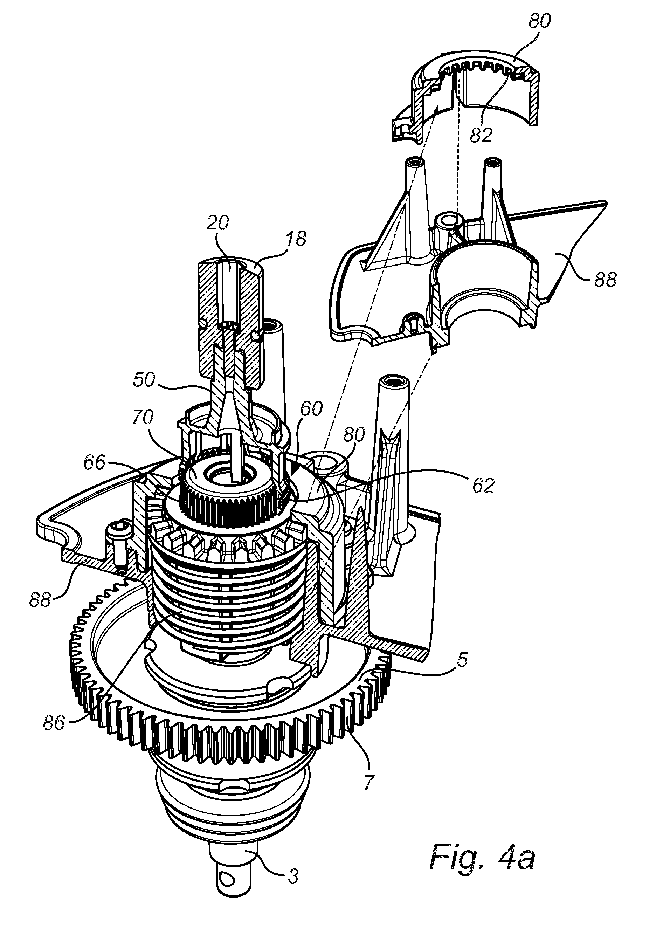

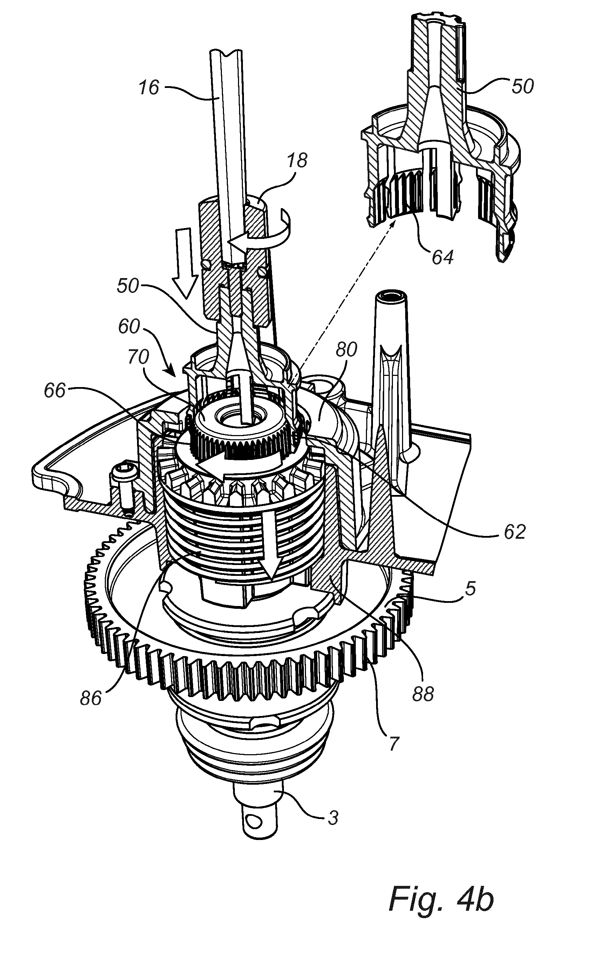

Fig. 1 a illustrates an actuator 1 for controlling a valve having a valve rod. The valve and valve rod, which are not part of the inventive concept, are not shown in the drawings but may be any suitable type of valve for a fluid distribution system. The actuator 1 comprises an actuator spindle 3 arranged at least partly inside an actuator housing 4. The actuator spindle 3 is operatively connected to the valve rod of the valve in order to move the valve rod and thereby varying the opening of the valve. The actuator 1 further comprises a motor (not shown) connected to the actuator spindle 3 via a gear arrangement. A main gear wheel 5 of the gear arrangement is shown in Figs. 4a and 4b. In normal operating mode, the motor, for example an electrically driven motor, drives the gear arrangement including said main gear wheel 5 which transfers its rotational movement into reciprocal movement of the actuator spindle 3.

Although not illustrated, the gear arrangement may typically comprise a first gear wheel arranged in rotational connection with the motor, said main gear wheel 5 directly connected with the actuator spindle 3, and at least one intermediate gear wheel arranged between the first gear wheel and the main gear wheel 5, the at least one intermediate gear wheel is arranged to transfer rotational movement from the first gear wheel to the main gear wheel 5. However, other gear arrangements are also conceivable, e.g. with fewer or more gear wheels.

The main gear wheel 5 comprises gear teeth 7 arranged on an outer surface of the main gear wheel 5, the gear teeth 7 being arranged for mating with corresponding gear teeth of another gear wheel, such as an intermediate gear wheel as described above. The main gear wheel 5 further comprises an internally arranged thread (not illustrated) adapted to engage with a matching thread 9 provided externally on the actuator spindle 3 (see Figs. 1 a-2). As the main gear wheel 5 is driven by the motor, it rotates while being locked in the axial position. Thus, the main gearwheel 5 does not move along its central axis. Since the main gear wheel 5 is axially locked, the actuator spindle 3 is moved in the axial direction as the rotational movement of the main gear wheel 5 is transferred to an axial movement of the actuator spindle 3 via the engagement of the internal thread of the main gear wheel 5 and the external matching thread 9 of the actuator spindle 3. In other words, as the main gear wheel 5 rotates while being locked in the axial position, the rotational movement of the internal thread engaging with the external matching thread 9 is transferred into an axial movement of the actuator spindle 3, as the internal thread of the main gearwheel 5 exerts an axial force on the external matching thread 9 of the actuator spindle 3. Thus it should be understood that the internal thread and the external matching thread 9 have a matching lead and pitch.

The actuator in Figs. 1 a-1 b comprises a manual override arrangement 10 allowing an operator to manually manoeuvre the actuator spindle 3. The manual override arrangement 10 comprises a protecting first element 12 being arranged at least partly outside of the housing 4 and having a through hole 14 for receiving a tool 16, and a second element 18 arranged adjacent to the first element 12, the second element 18 comprises a receiving hole 20 for receiving the tool 16. As can be seen in Figs. 1 b, 3b and 4b the tool 16 is used when the actuator 1 is in the manual override operating mode. The second element 18 is operatively connected to the actuator spindle 3 via an intermediate element 50, a clutch arrangement 60 and an actuator spindle holder 70. The manual override arrangement 10 further comprises a locking element 80 which is arranged to lock the actuator spindle holder 70 in position during normal operating mode.

As best seen in Fig. 1 b, in particular the enlarged detailed view of the locking element 80 and the actuator spindle holder 70, the locking element 80 has a first engaging portion displaying a first set of teeth 82 which project axially in a direction towards the actuator spindle holder 70. The actuator spindle holder 70 has a second engaging portion displaying a second set of teeth 72 which project axially in a direction towards the locking element. The first set of teeth 82 and the second set of teeth 72 are adapted to mesh in with each other in the normal operating mode to lock the actuator spindle holder 70 and prevent rotational movement of the actuator spindle holder 70. Thus, the second engaging portion is adapted to engage with said first engaging portion, such that when said first engaging portion engages with said second engaging portion said actuator spindle holder 70 is locked to said locking element 80. The engaging portions are thus located at respective surfaces which extend perpendicularly to the actuator spindle axis. Although the engaging portions with the teeth 72, 82 are illustrated as being located on an upper/outer surface of the actuator spindle holder 70 and a lower/inner surface of the locking element 80, other configurations are also possible. For instance, instead of axially protruding teeth, it would be conceivable to have radially protruding mutually matching teeth. Furthermore, instead of teeth, other means to prevent axial rotation of the actuator spindle holder 70 are conceivable. One such example, is a polygonal outer surface of the actuator spindle holder 70 being rotationally lockable to a mating polygonal inner surface of the locking element 80.

At the first element 12, the housing 4 is curved and forms a space 22 together with an L-shaped portion of the first element 12, in the space 22 the first element 12 and the second element 18 are adapted to engage with each other. In other words the space 22 is formed between at least a part of an outer surface of the housing 4 and at least a part of an inner surface of the first element 12. In normal operating mode (Figs. 1 a and 3a), a top portion 24 of the second element 18 extends into the space 22. The first element 12 comprises a bevelled surface 26 facing the space 22 and at least partly facing the second element 18, or more precisely at least partly facing the top portion 24 of the second element 18.

The normal operating mode and the manual override operating mode of the actuator 1 will now be described in more detail. First, the normal operating mode will be described and after that, the manual override operating mode will be described.

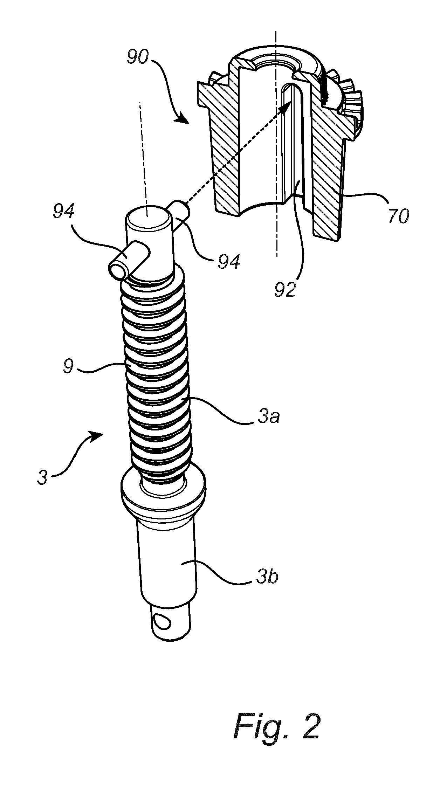

As best seen in Fig. 2, the actuator 1 further comprises a guiding arrangement 90 for guiding the actuator spindle 3 inside the actuator spindle holder 70. The guiding arrangement 90 comprises first guiding means 92 comprised in the actuator spindle holder 70 and second guiding means 94 comprised in the actuator spindle 3. In Figs. 1 a, 1 b and 2, the first guiding means 92 is illustrated as elongated grooves 92 provided in an inner surface of the actuator spindle holder 70. In the cut-away views only one elongated groove 92 is visible, the other one being located opposite to the first one on the inner surface of the actuator spindle holder. The elongated grooves 92 have a main extension in the axial direction of the actuator 1. The second guiding means 94 is illustrated as two pins 94 provided on an outer surface of the actuator spindle 3, the pins 94 are adapted to protrude radially into the respective elongated groove 92 in order to guide the actuator spindle 3 in the axial direction in the normal operating mode.

The reciprocal movement of the actuator spindle 3 is typically transferred to a reciprocal movement of a valve rod to which it is operatively connected to, in order to control the valve rod and the opening or closing of the valve. It should be understood that the actuator spindle 3 may be moved towards and away from the valve to which it is connected to in order to close or open the valve respectively.

Furthermore, in the normal operating mode, a tool 16 is prevented from engaging with the receiving hole 20 of the second element 18 by a blocking wall portion 28 of the first element 12. In other words, the arrangement of the first element 12 in the normal operating mode ensures that the through hole 14 of the first element 12 is unaligned with the receiving hole 20 of the second element 18. Hereby, the operator is prevented from manually operating the actuator 1 without undertaking an action to move the first element 12 and thereby align the through hole 14 with the receiving hole 20. Furthermore, the first element 12 and the wall blocking portion 28 of the first element 12 reduces the risk of having particles and debris entering the actuator 1 in the normal operating mode.

In case of loss of grid, or e.g. before the actuator 1 has been connected to the grid during e.g. installation of the actuator 1 to the valve, or due to malfunction of one or more components used during normal operating mode (e.g. malfunctioning of the motor or the gear arrangement) the manual override operating mode may be used. In the manual override operating mode, it is assumed that the motor is unable to drive the actuator spindle 3.

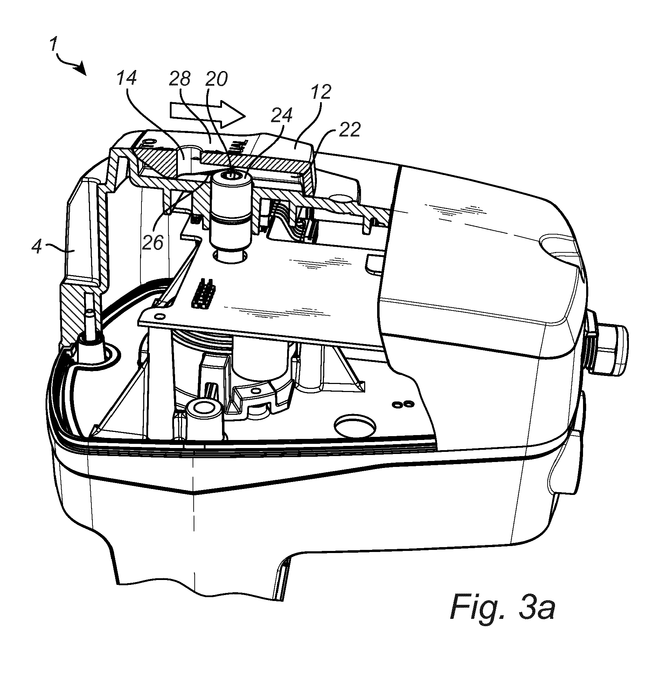

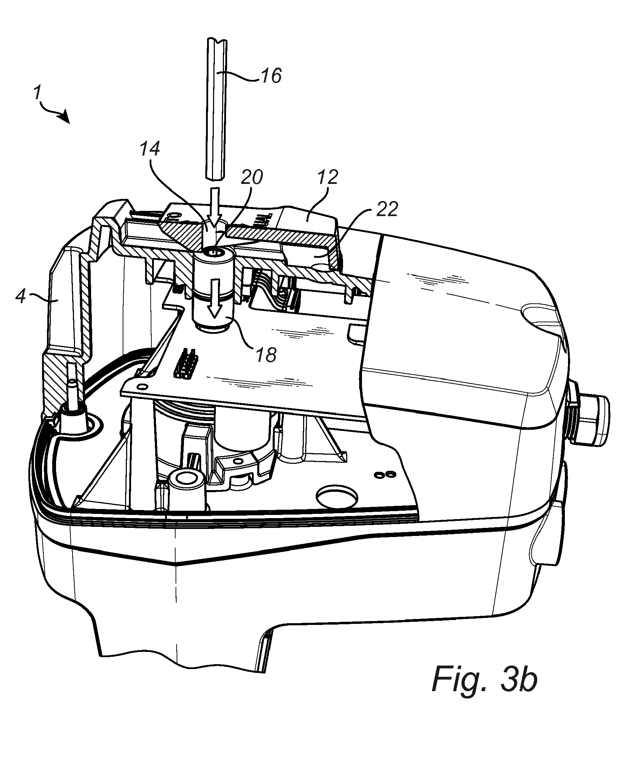

In Figs. 1 b, 3b and 4b, the actuator 1 is set in the manual override operating mode. Here the manual override arrangement 10 allows for an operator to manually manoeuvre the actuator spindle 3. As compared to Figs. 1a, 3a and 4a, the first element 12 has been moved, e.g. by a slideable movement, such that the bevelled surface 26 of the first element 12 has been moved inside the space 22 and now engages with the second element 18 via the top portion 24 of the second element 18. The second element 18 has thereby been pushed in the axial direction by the first element 12 and its bevelled surface 26 towards the actuator spindle 3 and has now moved further into the housing 4 of the actuator 1 and outside of the space 22, as can be seen in Figs. 1b and 3b.

As shown in Fig. 1 b, the intermediate element 50 and the actuator spindle holder 70 have also been moved in the axial direction further away from the space 22 as compared to in Fig. 1 a as a consequence of that the second element 18 is connected to actuator spindle holder 70 via the intermediate element 50. Thus, in Fig. 1 b, the actuator spindle holder 70 is not rotationally locked (as compared to in Fig. 1 a) to the locking element 80 as the teeth 72 of the actuator spindle holder 70 have been axially separated from the teeth 82 of the locking element 80, i.e. the first and second engaging portions of the locking arrangement have become separated from their mutually engaged position. Hereby, the actuator spindle holder 70 may be moved in a direction being perpendicular to the axial direction. In particular, the actuator spindle holder 70 may now be rotated around its central axis.

The actuator further comprises a spring element 86 biased to press the teeth 72 of the actuator spindle holder 70 towards the teeth 82 of the locking element 80. The locking element 80 is provided internally of the housing 4 of the actuator 1, and is fixedly attached to a fundament or a base portion 88 inside said housing 4. The spring element 86 is provided between the base portion 88 and the actuator spindle holder 70. When the first element 12 is moved so that the second element 18 and therefore the actuator spindle holder 70 is axially displaced, the biasing force of the spring element 86 is overcome and the actuator spindle holder 70 is released from the locking element 18 and the rotationally locked position. Thus, by overcoming the biasing force of the spring element 86, the manual override operating mode is obtained.

As compared to Fig. 1 a, where the through hole 14 of the first element 12 is unaligned with the receiving hole 20 of the second element 18 and thereby prevents a tool 16 from engaging with the second element 18, in Fig. 1 b the first element 12 has been moved such that the through hole 14 and the receiving hole 20 are aligned. Hereby a tool 16 may be inserted into the actuator 1 via the through hole 14 and into the receiving hole 20 such that the second element 18 may be manually operated by the tool 16. Preferably, the receiving hole 20 has a non-circular cross section, e.g. a hexagonal cross section, and preferably, the tool 16 has a matching non-circular cross section, e.g. a hexagonal cross section. Hereby, a rotational movement of the tool 16, when the tool 16 is located inside the receiving hole 20, will result in a rotational movement of the second element 18. The tool may e.g. be a hex-key or an Allen-key.

By rotating the second element 18 with the tool 16, the intermediate element 50 will rotate accordingly as it is rotatably connected/attached to the second element 18. Depending on the reluctance of the actuator spindle holder to be rotated (e.g. due to that the actuator spindle 3 has pushed the valve rod into the closed position of the valve), and depending on the clutch arrangement 60, the rotational movement of the intermediate element 50 will be further transferred to the actuator spindle holder 70 and the actuator spindle 3.

As shown in Figs. 1 a, 1 b, 4a and 4b, the clutch arrangement 60 is arranged between the intermediate element 50 and the actuator spindle holder 70. The clutch arrangement 60 comprises a clutch spring 62, first clutch engaging portion 64 (see the separate enlarged detailed view of the intermediate element 50 in Fig. 4b) comprised in an inner surface of the intermediate element 50, and second clutch engaging portion 66 comprised in an outer surface of the actuator spindle holder 70. The first and the second clutch engaging portions 64, 66 are arranged to engage which each other, and the clutch spring 62 is arranged to press the first clutch engaging portion 64 towards the second clutch engaging portion 66. The clutch arrangement 60 may e.g. be designed so that rotational movement of the intermediate element 50 is only transferred to the actuator spindle holder 70 up to a certain threshold force. For example, if the actuator spindle 3 has pushed the valve rod into a valve seat of the valve (i.e. to a closed position of the valve), it is not desirable to further move the actuator spindle 3 towards the valve as this may damage components in the valve (e.g. the valve plug or the valve seat) and/or the actuator 1 (e.g. the actuator spindle holder 70 or the actuator spindle 3). Thus, the clutch arrangement 60, and more specifically the clutch spring 62, is preferably adapted in such a way that when the threshold force is reached, the clutch spring deflects whereby the first and second clutch engaging portions 64, 66 disengage and no rotational movement is allowed to be transferred from the intermediate element 50 to the actuator spindle holder 70. In other words, the clutch arrangement 60 may be referred to as an overload-protected clutch arrangement 60.

Provided that the rotational movement from the intermediate element 50 is transferred to the actuator spindle holder 70 via the clutch arrangement 60 (i.e. provided that the threshold force is not reached), the actuator spindle holder 70 will rotate together with the actuator spindle 3 as an inner surface of the elongated grooves 92 of the actuator spindle holder 70 will act on the pins 94 of the actuator spindle 3, and thereby transfer the rotational movement of the actuator spindle holder 70 to the actuator spindle 3. Hereby the actuator spindle 3 will rotate.

It should be understood from the above that the actuator spindle 3 moves differently depending on if it is driven by the motor via the main gear wheel 5 in the normal operating mode or by a tool 16 in the manual override operating mode. In the normal operating mode, the actuator spindle 3 moves reciprocally, i.e. up and down, in the axial direction without being rotated (as the main gear wheel 5 rotates clockwise or counter-clockwise while being locked in its axial position). In the manual override operating mode, the actuator spindle 3 is rotated by the tool 16 (via the second element 18, the intermediate element 50, the clutch arrangement 60 and the actuator spindle holder 70) and the internally arranged thread of the main gear wheel 5 engages with the externally arranged matching thread 9 of the actuator spindle 3 which allows the actuator spindle 3 to be moved internally of the main gearwheel 5 in the axial direction.

However, as the valve rod is typically moved reciprocally in order to control the opening and closing of the valve, i.e. independently of whether the actuator 1 is operated in the manual operating mode or in the manual override operating mode, a rotational adjustment means transferring the rotational movement of the actuator spindle 3 (in the manual override operating mode) into a reciprocal movement of the valve rod is typically used. Such rotational adjustment means may be accomplished in various ways. For instance, with reference to Fig. 2, the actuator spindle 3 may have a first spindle part 3a and a second spindle part 3b. The first spindle part 3a is only axially but not rotationally locked to the second spindle part 3b. The second spindle part 3b is rotationally locked relative to the housing 4. For instance the second spindle part 3b may have an internal compartment in which a flange (not shown) of the first spindle part 3a may rotate. Thus, regardless of if the first spindle part 3a is only moved axially (normal operating mode) or is rotated and axially moved (manual override operating mode), the second spindle part 3b will only perform an axial movement and no rotational movement.

In other example embodiments, with reference to Fig. 2, the first actuator spindle part 3a and the second actuator spindle part 3b may be made in one piece or at least non-rotatably connected to each other. In such case a rotational adjustment means may be provided, for instance, as follows. The second actuator spindle part 3b, or at least a portion of it may extend into a coupling housing (not shown) having its opposite end connectable to the valve rod. The coupling housing is rotationally locked, but can move axially, e.g. along guide rails or the like. In the coupling housing a load bush may be provided, which is rotatable within the coupling housing. An end portion of the second actuator spindle part 3b may be connected to the load bush e.g. by means of a connecting pin (in Fig. 2 a circle is illustrated at the lower end portion of the second actuator spindle part 3b, and at this circle a pin could be provided and connected to the load bush). Thus, in manual override operating mode, the actuator spindle 3 rotates and is rigidly connected to the load bush within the coupling housing. As described above in this application, in manual override operating mode the rotation of the actuator spindle 3 will due to its thread 9 advance the actuator spindle axially. Since the connected load bush will rotate with the actuator spindle 3, and in particular rotate within the rotationally fixed coupling housing, only the axial advancement (or withdrawal) of the actuator spindle will be transmitted to the coupling housing, and thus to a valve rod connected to the coupling housing.

According to at least one example embodiment, the first and the second elements 12, 18 may be referred to as a tool receiving arrangement. However, according to at least one example embodiment, only the second element 18 is referred to as a tool receiving arrangement.

## Claims

1. An actuator for controlling a valve having a valve rod, said actuator comprising:
a housing;
an actuator spindle arranged at least partly inside said housing, said actuator spindle being arranged to control the movement of the valve rod;
a manual override arrangement for manually moving said actuator spindle, said manual override arrangement comprising:
a first element having a through hole for receiving a tool,
a second element operatively connected to said actuator spindle and having a receiving hole for receiving the tool,
wherein said first element is movable between a first position where said through hole is non-aligned with said receiving hole, and a second position where said through hole is aligned with said receiving hole such that the tool may extend through said through hole and into said receiving hole in order to rotate said second element for transferring the rotation to said actuator spindle.

2. An actuator according to claim 1, wherein said first element comprises a bevelled surface at least partly facing said second element, and wherein said bevelled surface is arranged to move said second element as said first element is moved from its first to its second position.

3. An actuator according to any one of claims 1-2, wherein said first element is movable from its first position to its second position by being slidably movable or rotatably movable.

4. An actuator according to any one of the preceding claims, wherein said manual override arrangement further comprises a locking element, an actuator spindle holder for holding at least a portion of said actuator spindle, and a locking arrangement having a first engaging portion comprised in said locking element and a second engaging portion comprised in said actuator spindle holder, said second engaging portion being arranged to engage with said first engaging portion, such that when said first engaging portion engages with said second engaging portion said actuator spindle holder is locked to said locking element.

5. An actuator according to claim 4, wherein said second element is operatively connected to, and is rotatably movable with said actuator spindle holder, and wherein
when said first element is in its first position, said actuator spindle holder is locked to said locking element, and
when said first element is in its second position, said second element and said actuator spindle holder is moved in such a way that said second engaging portion comprised in said actuator spindle holder is disengaged from said first engaging portion comprised in said locking element whereby said actuator spindle holder is unlocked from said locking element.

6. An actuator according to any one of claims 4-5, wherein said actuator spindle has a main extension in an axial direction of said actuator, and wherein said second element and said actuator spindle holder are adapted to move in said axial direction.

7. An actuator according to any one of claims 4-6, wherein said second element is operatively connected to said actuator spindle holder via a clutch arrangement.

8. An actuator according to any one of claims 4-6, wherein said second element is made in one piece with said actuator spindle holder.

9. An actuator according to any one of claims 4-7, wherein said actuator spindle holder is arranged to hold said actuator spindle, and is arranged to be moved together with said actuator spindle when said actuator spindle holder is unlocked from said locking element.

10. An actuator according to any one of the preceding claims, wherein said receiving hole is a blind bore.
